# EUROPEAN PATENT APPLICATION

(11) **EP 1 102 106 A2**
(43) Date of publication of application: **23.05.2001**
(21) Application number: 00117821.9
(22) Date of filing: 18.08.2000
(51) Int. Cl.: G02B 27/22, H04N 13/00

(54) **Stereoscopic image display apparatus**

(30) Priority: 17.11.1999 JP 32664599
(71) Applicant: Mixed Reality Systems Laboratory Inc., Yokohama-shi, Kanagawa-ken (JP)
(72) Inventor: Takikawa, Tomoshi, Mixed Reality Systems Lab. Ltd., Yokohama-shi, Kanagawa-ken (JP); Morishima, Hideki, Mixed Reality Systems Lab. Ltd., Yokohama-shi, Kanagawa-ken (JP)
(74) Representative: Leson, Thomas Johannes Alois, Dipl.-Ing.

(57) **Abstract**

A stereoscopic image display apparatus is constructed to guide a parallax image displayed on a display, to the left eye and to the right eye of an observer, thereby permitting the observer to stereoscopically observe the image information displayed on the display. The stereoscopic image display apparatus has a view-point position detecting device for detecting positions of view points of the observer, an image display device for displaying the parallax image, a light source device in which a position of each light emitting portion is controlled based on information from the view-point position detecting device, an optical system for imaging each light emitting portion of the light source device at or near an observation position, and a separating device for separating light from the light source device to guide separated beams to the two eyes of the observer.

## Description

### BACKGROUND OF THE INVENTION

### Field of the Invention

The present invention relates to a stereoscopic image display apparatus and, more particularly, to the stereoscopic image display apparatus that has an image display section and is constructed to display a stereoscopic image (parallax image) on the image display section so as to permit observation of the stereoscopic image and that is suitably applicable to satisfactory stereoscopic presentation of image information in a display device for television, video, and computer monitors, game machines, and so on. Related Background Art

As one of the conventional stereoscopic image observation methods, there is a method in which the parallax images for the right eye and for the left eye are provided with states of polarization different from each other and are guided through polarizing spectacles toward the left eye and toward the right eye to be separated from each other, thereby permitting observation of a stereoscopic image.

In this method, a liquid crystal shutter is disposed on the display side in order to make the different states of polarization, the polarization states are switched one from another in synchronism with field signals of display image on the display, and the observer with the polarizing spectacles observes the left and right parallax images separated in time-sharing manner, one by one by the respective eyes, thereby being allowed to experience stereoscopic vision.

This stereoscopic vision observation method making use of polarization required the observer to always wear the polarizing spectacles and thus had such a drawback that it was troublesome.

As another stereoscopic image display method of permitting observation of the stereoscopic image without use of the polarizing spectacles, different from the above method, there is a lenticular lens method in which a lenticular lens is disposed in front of the display to spatially separate the parallax images toward the left and right eyes of an observer.

Since the lenticular lens was placed in front of the display for displaying the image, this method had such drawbacks that the quality of image was degraded by surface reflection from the lens surface or the like and that the black matrix of the liquid crystal display appeared as moire fringes to obstruct the view.

As against it, the inventors filed Japanese Patent Application Laid-Open No. 9-311294, which discloses the stereoscopic image display apparatus having a wide observation field and permitting good observation of the stereoscopic image, using a method in which two lenticular lenses are placed behind the image display to separate the images toward the observer's left and right eyes.

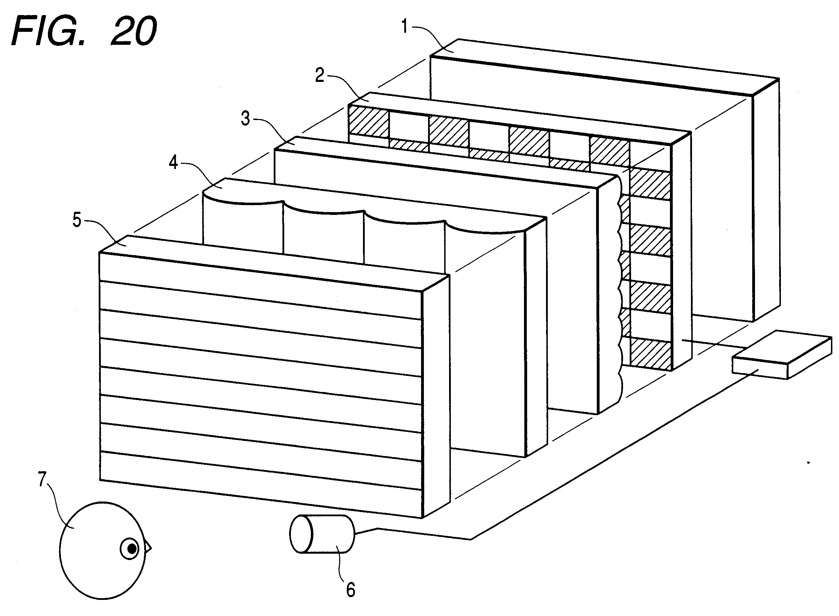

Further, the inventors also filed Japanese Patent Application Laid-Open No. 10-078563 to suggest the improvement in the above apparatus. The application Laid-Open No. 10-078563 discloses the stereoscopic image display apparatus, as illustrated in Fig. 20, in which the stereoscopic vision area is moved left and right and back and forth to follow movement of the observer 7, based on information obtained by view-point position detector 6 for detecting the observation position of the observer 7.

In Fig. 20, numeral 1 designates a backlight source, 2 an optical modulator for displaying a mask pattern, 3 a lateral lenticular lens, 4 a vertical lenticular lens, 5 the display device for display of image, and 6 the view-point position detector.

### SUMMARY OF THE INVENTION

An object of the present invention is to present further improvement in the stereoscopic image display apparatus proposed before by the inventors and provide the stereoscopic image display apparatus that permits observation of the stereoscopic image with good image quality.

Another object of the present invention is to provide the stereoscopic image display apparatus that permits a plurality of observers to observe the stereoscopic image simultaneously with good image quality.

A stereoscopic image display apparatus according to one aspect of the present invention is a stereoscopic image display apparatus comprising light source means in which positions of a plurality of light emitting portions are controllable; image display means which displays a stripe image obtained by dividing parallax images into a lot of stripe pixels and arranging the stripe pixels in a predetermined order to form one image; separating means which converts beams from the light source means into beams with directivity and which separates beams from the image display means into beams toward a plurality of areas and guides the separated beams to an observer so as to permit the observer to visually recognize the stripe image as a stereoscopic image; optical means for forming an image of each light emitting portion of the light source means at or near an observation position through the separating means and the image display means; and view-point position detecting means for detecting positions of view points of the observer, wherein said light source means controls the number and positions of light emitting portions, based on a signal from the view-point position detecting means.

In a further aspect of the present invention, said separating means is comprised of an optical modulator having a discrete pixel structure, or comprised of an optical modulator having a discrete pixel structure and an optical system.

In a further aspect of the present invention, said optical system comprises a vertical cylindrical lens array consisting of vertical cylindrical lenses having a generating line in the vertical direction and a horizontal cylindrical lens array consisting of horizontal cylindrical lenses having a generating line in the horizontal direction.

In a further aspect of the present invention, said view-point position detecting means comprises infrared light emitting means and detects positions of pupils of the eyes of the observer.

In a further aspect of the present invention, said image display means is comprised of a transmissive image display device having a discrete pixel structure.

In a further aspect of the present invention, said light source means is a surface emission type light source having a discrete pixel structure.

In a further aspect of the present invention, said optical means is a Fresnel lens acting as a convex lens, or a Fresnel lens acting as a convex lens only in the horizontal direction.

In a further aspect of the present invention, said view-point position detecting means detects positions of view points of a plurality of observers independently of each other and said light source means controls positions of light emitting portions corresponding to the respective observers, based on a signal from the view-point position detecting means.

A stereoscopic image display apparatus according to one aspect of the present invention is a stereoscopic image display apparatus in which beams from light source means in which a position of a light emitting portion is controllable, are converted into beams with directivity by separating means to illuminate a parallax image on image display means displaying stripes of parallax images whereupon beams based on the respective parallax images are guided separately to the right eye and to the left eye of an observer, thereby permitting the observer to observe a stereoscopic image, wherein an image of the light emitting portion of the light source means is formed at or near an observation position through the separating means and the image display means by optical means and wherein the position of the light emitting portion of the light source means is controlled, based on a signal from view-point position detecting means for detecting positions of view points of the observer.

In a further aspect of the present invention, said separating means is comprised of an optical modulator having a discrete pixel structure, or comprised of an optical modulator having a discrete pixel structure and an optical system.

In a further aspect of the present invention, said optical system comprises a vertical cylindrical lens array consisting of vertical cylindrical lenses having a generating line in the vertical direction and a horizontal cylindrical lens array consisting of horizontal cylindrical lenses having a generating line in the horizontal direction.

In a further aspect of the present invention, said view-point position detecting means comprises infrared light emitting means and detects positions of pupils of the eyes of the observer.

In a further aspect of the present invention, said image display means is comprised of a transmissive image display device having a discrete pixel structure.

In a further aspect of the present invention, said light source means is a surface emission type light source having a discrete pixel structure.

In a further aspect of the present invention, said optical means is a Fresnel lens acting as a convex lens, or a Fresnel lens acting as a convex lens only in the horizontal direction.

A stereoscopic image display apparatus according to one aspect of the present invention is a stereoscopic image display apparatus comprising light source means in which positions of light emitting portions in a number according to the number of observers are controllable; image display means which displays a stripe image obtained by dividing a parallax image for the right eye and a parallax image for the left eye each into a lot of stripe pixels and alternately arranging the right stripe pixels and left stripe pixels thus obtained, in a predetermined order to form one image; separating means which converts beams from the light source means into beams with directivity by a lenticular lens array and which separates beams from the image display means into beams toward a plurality of areas and guides the beams to each observer to permit the observer to visually recognize the stripe image as a stereoscopic image; imaging means for imaging each light emitting portion of the light source means at or near an observation position through the separating means and the image display means; and view-point position detecting means for detecting positions of view points of each observer, wherein said light source means controls the number and positions of light emitting portions, based on a signal from the view-point position detecting means.

### BRIEF DESCRIPTION OF THE DRAWINGS

Fig. 1 is an overall view of the stereoscopic image display apparatus as Embodiment 1 of the present invention;
Fig. 2 is a system block diagram of Embodiment 1;
Fig. 3 is a schematic diagram to show the main part of the stereoscopic image display section of Embodiment 1;
Fig. 4 is an explanatory diagram to illustrate the action of the light source means of Embodiment 1;
Fig. 5 is an explanatory diagram to illustrate the mask pattern of Embodiment 1;
Fig. 6 is an explanatory diagram to illustrate the synthesis of parallax images in Embodiment 1;
Fig. 7 is an explanatory diagram to illustrate a pupil position detecting camera of Fig. 1;
Fig. 8 is a photographic screen of a visible light camera of Fig. 7;
Fig. 9 is a photographic screen of an infrared light camera of Fig. 7;
Fig. 10 is an explanatory diagram to illustrate the optical action of Embodiment 1;
Fig. 11 is a system block diagram of Embodiment 2;
Fig. 12 is a schematic diagram to show the main part of the stereoscopic image display section of Embodiment 2;
Fig. 13 is an explanatory diagram to illustrate the action of the light source means of Embodiment 2;
Fig. 14 is an explanatory diagram to illustrate the mask pattern of Embodiment 2;
Fig. 15 is an explanatory diagram to illustrate the synthesis of parallax images in Embodiment 2;
Fig. 16 is an explanatory diagram (X-Z section) to illustrate the optical action of Embodiment 2;
Fig. 17 is an explanatory diagram (X-Z section) to illustrate the optical action of Embodiment 2;
Fig. 18 is an explanatory diagram (Y-Z section) to illustrate the optical action of Embodiment 2;
Fig. 19 is an explanatory diagram (Y-Z section) to illustrate the optical action of Embodiment 2; and
Fig. 20 is a schematic diagram to show the main part of the conventional stereoscopic image display apparatus.

### DETAILED DESCRIPTION OF THE PREFERRED EMBODIMENTS (Embodiment 1)

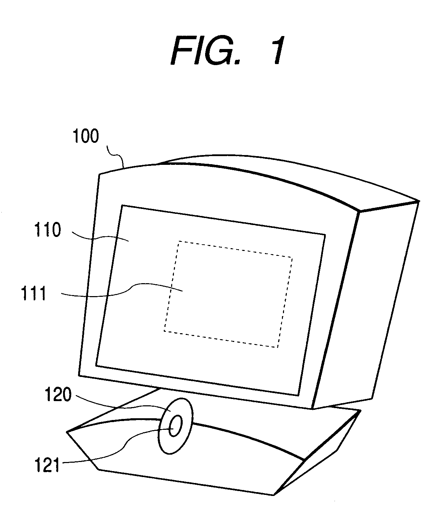

Embodiment 1 of the stereoscopic image display apparatus of the present invention will be described hereinafter with reference to Figs. 1 to 10. Fig. 1 is an appearance view of Embodiment 1 of the present invention.

In the same figure, numeral 100 denotes the main body indicating the whole of this apparatus. Numeral 110 represents an image display section (display).

Numeral 111 indicates a stereoscopic image display region (3D window) for displaying the stereoscopic image (parallax image) in the image display section 110.

Numeral 120 designates a pupil position detector (view-point position detector) for detecting the pupil positions of the observer's left and right eyes. Numeral 121 denotes a photographing device (camera), which is a component of the pupil position detector 120.

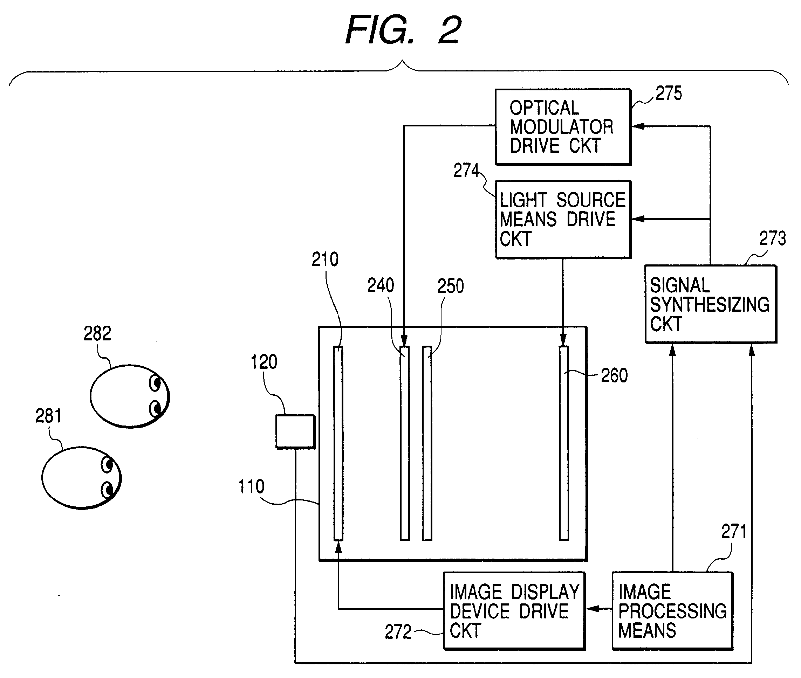

Fig. 2 is a system block diagram for explaining the system of Embodiment 1. In the same figure, the image display section (display) 110 has an image display device (image display means) 210 comprised of a transmissive display device of liquid crystal or the like having the discrete pixel structure, an optical modulator 240 comprised of a transmissive display device of liquid crystal or the like also having the discrete pixel structure, an optical means 250 comprised of a Fresnel lens or the like, a light source means 260 comprised of a plasma display or the like having the discrete pixel structure, and so on.

The image display device 210 displays a stereoscopic image with parallax (parallax image) or an ordinary two-dimensional image without parallax. A region for display of the parallax image corresponds to the stereoscopic image display region 111 of Fig. 1.

The image display 210 is driven by an image display device drive circuit 272 and an image based on a signal from an image processing means 271 is displayed on a display screen of the image display 210.

The image processing means 271 outputs the signal of the image to be displayed on the image display device 210, through the image display device drive circuit 272 to the display, and also outputs the size of the stereoscopic image display region 111, the position information thereof, and the synchronous signal of the display image to a signal synthesizing circuit 273.

The pupil position detector 120 outputs pupil position information of observers 281, 282 observing the image display device 210, to the signal synthesizing circuit 273.

The signal synthesizing circuit 273 generates information for controlling the optical modulator 240 and the light source means 260, based on these information, and outputs the information to an optical modulator drive circuit 275 and to a light source means drive circuit 274.

The optical modulator 240 is driven by the optical modulator drive circuit 275 to display the mask pattern of vertical slit shape, which will be described hereinafter, in the region corresponding to the stereoscopic image display region 111 of the image display device 210 and display an image of uniform density in the two-dimensional image display region on the display screen thereof.

On that occasion, the pattern shape of the mask pattern, the display position of the pattern; and the size of the pattern are controlled, based on the size of the stereoscopic image display region 111 displayed on the image display device 210, the position information, and the observer's pupil position information from the pupil position detector 120.

The light source means 260 is driven by the light source means drive circuit 274 and on that occasion, positions of paired on portions of the light source means 260 are controlled, based on the observer's pupil position information from the pupil position detector 120. This permits each observer to observe the stereoscopic image at any location, as detailed hereinafter.

Numerals 281 and 282 represent the observers of the display and the present embodiment shows an example in which there are two observers.

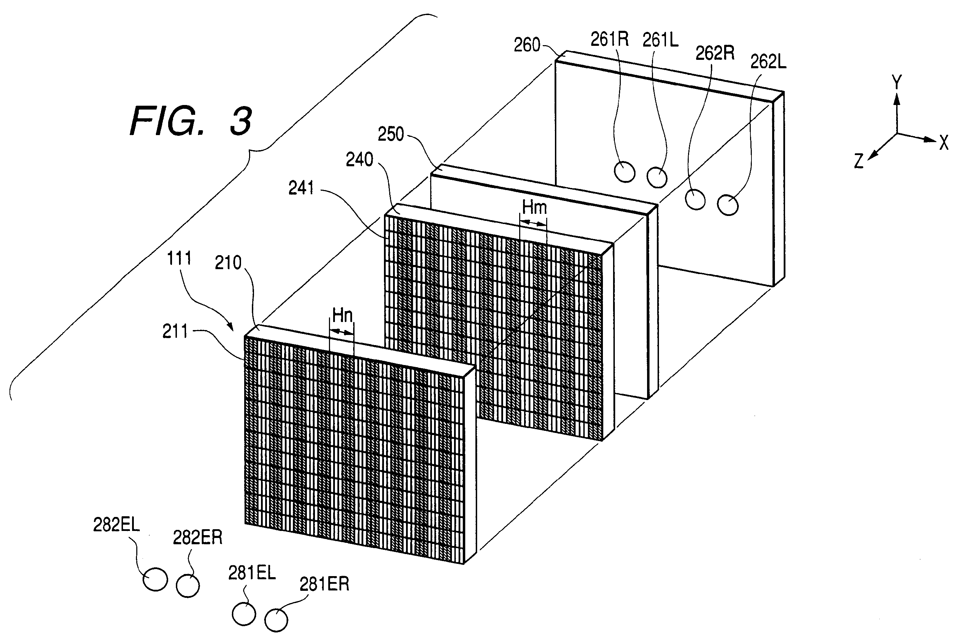

Fig. 3 is a schematic diagram to show the main part of the stereoscopic image display region 111. In Fig. 3, 261R, 261L, and 262R, 262L in the light source means 260 indicate on areas of the light source, and the other areas are in an off state.

The optical means 250 of the Fresnel lens or the like acting as a convex lens (positive lens) is designed according to such optical specifications as to image the surface of the light source means 260 approximately at the observer's position.

The optical modulator 240 displays the mask pattern 241 acting as an optical barrier, on the display screen thereof.

The image display device 210 displays a synthetic parallax image 211, in which vertical stripes of the left and right images (parallax images) are arranged alternately at the pitch Hn, on the display screen thereof.

It is noted that Fig. 3 is drawn with omitting glass covers, polarizers, electrodes, etc. of the image display device 210, the optical modulator 240, and the light source means 260.

281EL, 281ER and 282EL, 282ER represent the left eye and the right eye of the observers 281, 282, respectively, observing the image display device 210.

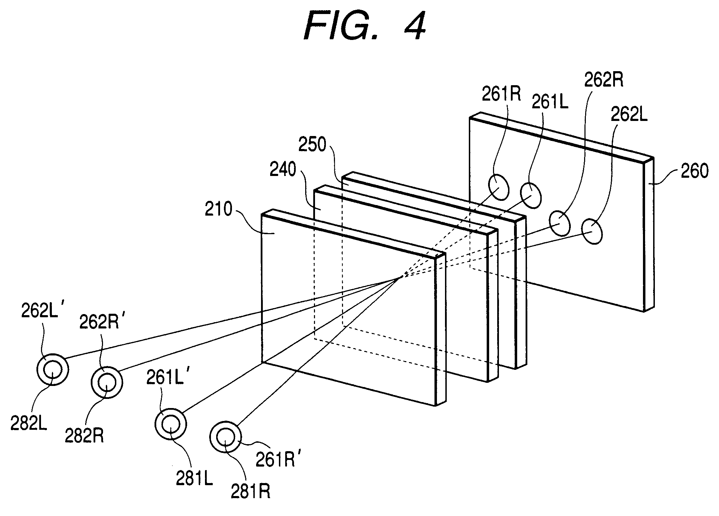

The on and off areas of the light source means 260 will be described below referring to Fig. 4.

In Fig. 4, images of the on areas 261R, 261L and 262R, 262L on the light source means 260 are focused at the observation position of the observers to form areas 261R', 261L' and 262R', 262L'.

On that occasion, the on areas 261R, 261L and 262R, 262L are controlled so that the left and right eyes 281EL, 281ER and 282EL, 282ER of the observers 281, 282 correspond to the respective areas 261L', 261R' and 262L', 262R'.

The size of the on areas is set so that the size of the images thereof can cover each eye of the observers, and the positions of the on areas are determined, based on the observer's pupil position information obtained from the pupil position detector 120 described previously.

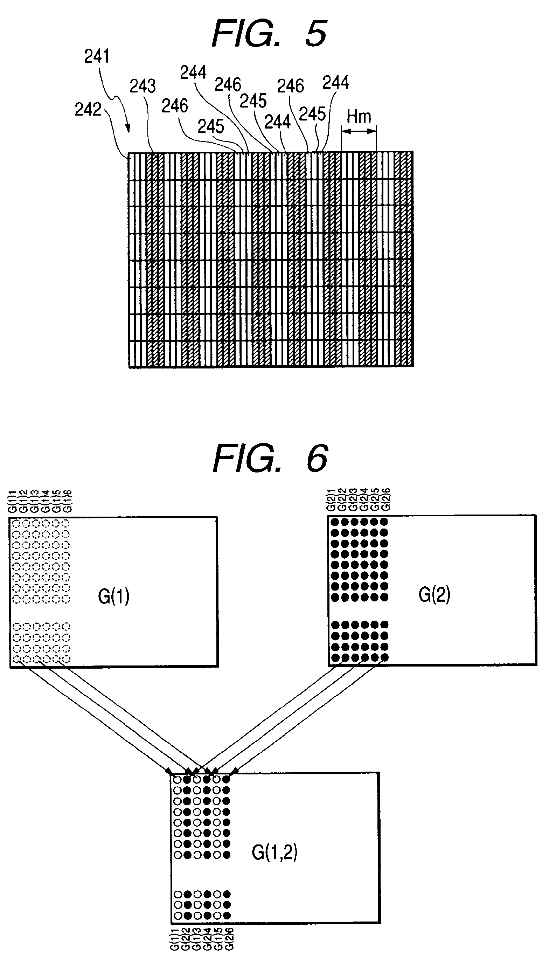

The mask pattern 241 displayed on the optical modulator 240 will be described below referring to Fig. 5. Fig. 5 is an enlarged front view of the mask pattern 241 illustrated in Fig. 3.

As illustrated in the same figure, the mask pattern 241 is composed of light-transmitting portions 242 and shield portions 243 of the slit shape, arranged at the pitch Hm in the horizontal direction.

In the present embodiment each transmitting portion 242 is composed of three pixels 244 to 246 and each shield portion 243 is also composed of three pixels.

The parallax image displayed on the image display device 210 will be described next referring to Fig. 6. In Fig. 6, the synthetic parallax image G(1, 2) is made by dividing two parallax images G(1), G(2) corresponding to the left and right eyes, into a lot of stripe images of the vertical stripe shape and arranging the stripe images G(1)i, G(2)i being elements of the parallax images G(1), G(2), on alternate pixels (alternate scan lines), as illustrated.

This synthetic parallax image is displayed on the image display device 210 and on that occasion, the system is arranged to satisfy such relation between image and barrier in the known parallax barrier method that the horizontal width of a pair of two pixels of the left and right images displayed on the image display device 210 corresponds to the horizontal pitch Hm of the mask pattern 241 of the optical modulator 240.

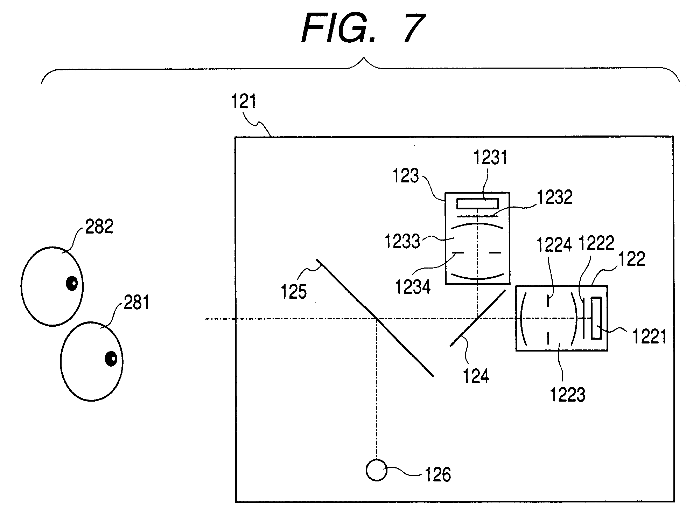

The observer's pupil position detector 120 will be described below referring to Figs. 7 to 9.

Fig. 7 is an explanatory diagram to illustrate the pupil position detecting camera 121 constituting the pupil position detector 120 of this Embodiment 1.

In the figure, numeral 122 indicates a visible light camera having the sensitivity in the visible light region, 123 an infrared light camera having the sensitivity in the infrared light region, 124 and 125 half mirrors, and 126 an infrared light emitter having its spectral intensity in the infrared region, for example, at the wavelength 850 nm, such as an infrared emitting LED or the like.

These components are arranged, as illustrated in the figure, so that the two cameras 122, 123 are placed optically on the same axis and at equivalent distances to the subject, their angles of view are set to an equal value, and the infrared light emitter 126 is located in the coaxial lighting layout with respect to the two cameras.

Each of the visible light camera 122 and the infrared light camera 123 is composed of an image pickup device 1221, 1231 of CCD etc., an optical filter 1222, 1232, and a taking lens 1223, 1233.

The spectral transmittance characteristics of the optical filter 1222 are set so that the visible light camera 122 has the sensitivity in the visible light region, in combination with the spectral sensitivity characteristics of the image pickup device 1221.

The spectral transmittance characteristics of the optical filter 1232 are set so that the infrared light camera 123 has the sensitivity in the region of the spectral characteristics of the infrared light emitter 126, in combination with the spectral sensitivity characteristics of the image pickup device 1231.

Numerals 1224 and 1234 indicate stops of the camera lenses 1223, 1233, respectively.

The pupil position detecting camera 121 in the above structure is positioned in the front lower part of the image display device 100 and the photographic range of the two cameras is set to cover the observer's face region.

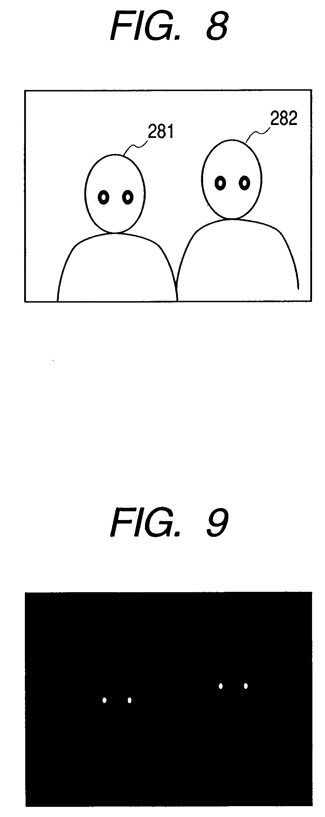

Photographic screens of the observers 281, 282 taken in this state are presented in Fig. 8 and Fig. 9.

Fig. 8 is the photographic screen of the observers taken by the visible light camera 122. Fig. 9 is the photographic screen by the infrared light camera 123.

Since in the near infrared region the reflectance of the retina of the human eyes is higher than that of the face skin, pupil images of the observer's eyes are displayed as bright points, as illustrated in Fig. 9, on the photographic screen of the infrared light camera by properly setting the emission intensity of the infrared light emitter 126 and the sensitivity of the infrared light camera 123.

The pupil position information of the observer's left and right eyes is obtained from these pupil images by a known image processing method.

By making use of the fact that the pupil-to-pupil distance E of the human eyes is near 63 mm, the pupil images of a plurality of observers are separated and identified in such a way that a pair of bright points apart at the pupil-to-pupil distance E are judged as the left and right eyes of one observer.

The pupil positions of the observer's eyes are always detected by detecting the pupil positions from the screen of the infrared light camera 123 and tracking the vicinity of the eyes of face images by a known pattern matching method, based on the information of the pupil positions, with the visible light camera 122.

The combination use of the image by the infrared light camera 123 and the image by the visible light camera 122 permits the apparatus to dispose of disappearance of the bright points of the pupil images in the infrared camera image, which occurs when the observer blinks.

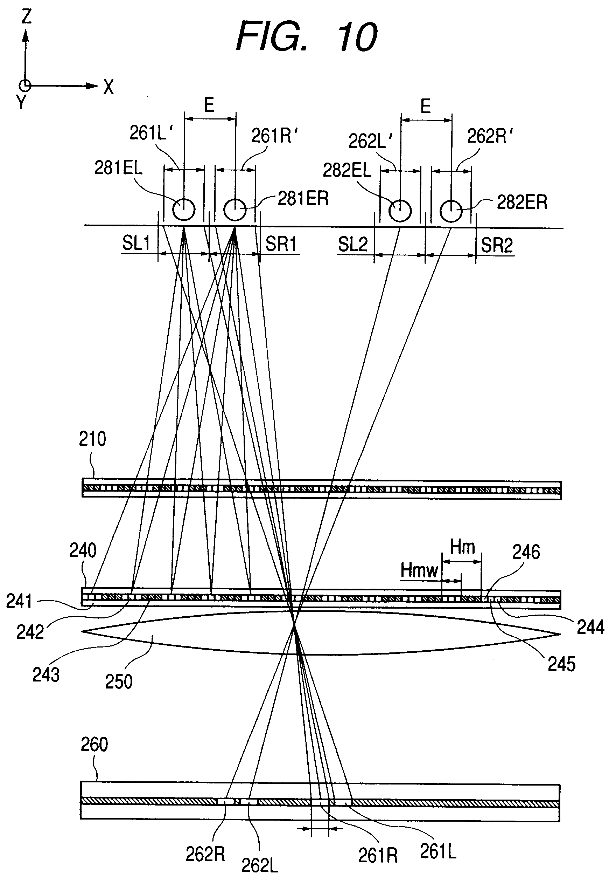

The optical action of the stereoscopic image display will be described below referring to Fig. 10. Fig. 10 is a horizontal cross-sectional view (X-Z section) of the 3D window region 111 of Fig. 3.

In the same figure, light from the on areas 261L, 261R of the light source means 260 travels through the optical means 250 to illuminate the optical modulator 240.

Light passing through the pixels 244 to 246 of the transmitting portions 242 in the optical modulator 240 is projected to areas SL1, SR1 at the observation position.

On that occasion, the beams projected to the illumination areas SL1, SR1 are modulated by the synthetic parallax image displayed on the display device 210 provided between the optical modulator 240 and the observer.

Since the transmitting portions 242 and the shield portions 243 displayed on the optical modulator 240, and the left and right parallax images in the form of vertical stripes displayed on the image display device 210 have the relation of the parallax barrier method as described previously, the area SL1 is illuminated with beams having passed, for example, through the element stripe images G(1)1, G(1)3, G(1)5,... of the parallax image G(1) forming the synthetic parallax image G(1, 2) illustrated in Fig. 5.

However, since the on area 261L is imaged in an area 261L' at the observation position because of the action of the optical means 250, the observable region of the parallax image G1 is limited to the vicinity of the area 261L' and it is not observed from the other positions, for example, from the areas 281ER, 282EL, and 282ER.

On the other hand, the area SR1 is illuminated with beams having passed through the element stripe images G(2)2, G(2)4, G(2)6,... of the parallax image G(2) constituting the synthetic parallax image G(1, 2) illustrated in Fig. 5.

However, since the on area 261R is imaged in an area 261R' at the observation position because of the action of the optical means 250, the observable region of the parallax image G2 is limited to the vicinity of the area 261R' and it is not observed from the other positions, for example, from the areas 281EL, 282EL, and 282ER.

Therefore, when the parallax images corresponding to the two eyes are selected as the parallax images G(1), G(2) and when the eyes 281EL, 281ER are placed in the illuminated parallax image areas 261L', 261R', the observer observes the parallax images separately and independently by the left and right eyes, so as to be able to observe the stereoscopic image.

The above description was made for the observer 261, but the same can also apply to the observer 262; the observer 262 can observe the stereoscopic image, independent of the relative position of the observer 262 to the observer 261, by properly displaying the parallax image on the display device 210 and the mask pattern 241 on the optical modulator 240 in the same manner as above.

When states corresponding to these observers 261, 262 are displayed alternately in time-sharing manner and within the time of action of the after image effect of the eyes, the two observers can observe the stereoscopic image on the same image display 210.

If the observers 261, 262 move, the positions of the light projection areas of the optical modulator 240 and the positions of the on areas of the light source means 260 will be moved in pixel units, based on the information of the pupil position detector 120, so that the illuminated parallax image areas follow the observer's pupil positions, thereby enabling stable observation of the stereoscopic image.

The above description was made for the case of two observers, but the same also applies to the cases of three or more observers; each observer can observe the stereoscopic image in time-sharing manner by controlling the emission areas of the light source means 260 to positions corresponding to the observer (e.g., by controlling positions of three pairs of emission portions in the case of three observers) and properly controlling the mask pattern 241 of the optical modulator 240.

In the present embodiment the independent emission areas are set respectively for the left and right eyes of each observer, but one emission area may be set so as to include the areas corresponding to the left and right eyes. In this case, n emission areas are set for n observers.

The optical means 250 can be an optical member having the power only in the horizontal direction (X-direction) and the emission areas are formed in the vertical stripe shape. This can increase the utilization efficiency of the light source.

Further, the present embodiment employs the surface light emitting device having the size approximately equal to that of the image display device, as the light emitting means and uses parts thereof to emit light, but the light emitting means may be a light emitting device having the emission part of a fixed area and mechanically moved according to the observer's position.

In addition, the present embodiment permits a lot of observers to observe the stereoscopic image simultaneously on a single image display device, by detecting the pupil positions of the observers and presenting the parallax images corresponding to the left and right eyes on the image display device. (Embodiment 2)

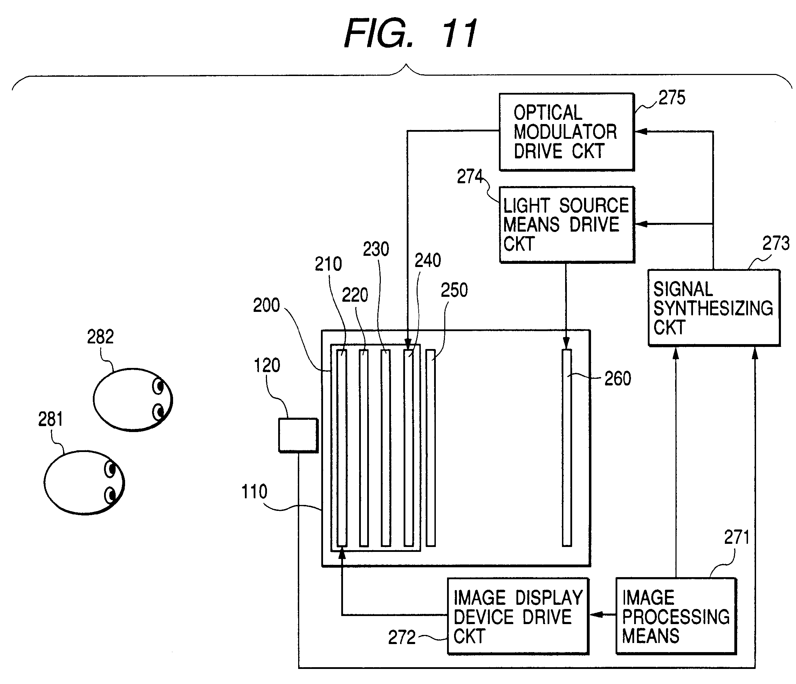

Embodiment 2 of the stereoscopic image display apparatus of the present invention will be described hereinafter with reference to Figs. 11 to 19. The members having the same action as in Embodiment 1 will be denoted by the same reference numerals and will be described mainly in comparison with Embodiment 1.

The overall diagram of this Embodiment 2 is similar to Fig. 1 showing the whole of Embodiment 1. Fig. 11 is a system block diagram for explaining the system of Embodiment 2.

In Fig. 11, the image display section 110 is comprised of a transmissive image display device 210 of liquid crystal or the like having the discrete pixel structure, a transmissive optical modulator 240 of liquid crystal or the like also having the discrete pixel structure, an optical means 250 of a Fresnel lens or the like, a light source means 260 of a plasma display or the like having the discrete pixel structure, and two lenticular lenses 220, 230 the directions of generating lines of which are perpendicular to each other and which are disposed between the image display device 210 and the optical modulator 240.

For convenience' sake of description hereinafter, a unit consisting of the image display 210, optical modulator 240, and two lenticular lenses 220, 230 is denoted by 200.

The image display device 210 displays the stereoscopic image with parallax (parallax image) or the ordinary two-dimensional image without parallax. The region for display of the parallax image corresponds to the stereoscopic image display region 111 of Fig. 1.

The image display device 210 is driven by the image display device drive circuit 272 and an image based on a signal from the image processing means 271 is displayed on the display screen thereof.

The image processing means 271 outputs the signal of the image to be displayed on the image display device 210, through the image display device drive circuit 272 to the display, and also outputs the size of the stereoscopic image display region 111, the position information thereof, and the synchronous signal of image to the signal synthesizing circuit 273.

The pupil position detector 120 outputs the pupil position information of the observer's eyes to the signal synthesizing circuit 273.

The signal synthesizing circuit 273 generates the information for controlling the optical modulator 240 and the light source means 260, based on these information, and outputs the information to the optical modulator drive circuit 275 and to the light source means drive circuit 274.

The optical modulator 240 is driven by the optical modulator drive circuit 275 to display a checkered mask pattern, described hereinafter, in the region corresponding to the stereoscopic image display region 111 of the image display device 210 and also present a display of uniform density in the two-dimensional image display area on the display screen thereof.

On that occasion, the pattern shape of the mask pattern of the optical modulator 240, the display position of the pattern, and the size of the pattern are controlled based on the size of the stereoscopic image display region 111 displayed on the image display device 210 described previously, the position information thereof, and the observer's pupil position information from the pupil position detector 120.

The light source means 260 is driven by the light source means drive circuit 274 and on that occasion, the positions of the on areas of the light source means 260 are controlled based on the observer's pupil position information from the pupil position detector 120.

Numerals 281 and 282 represent observers of the display 210, and the present embodiment is an example of two observers.

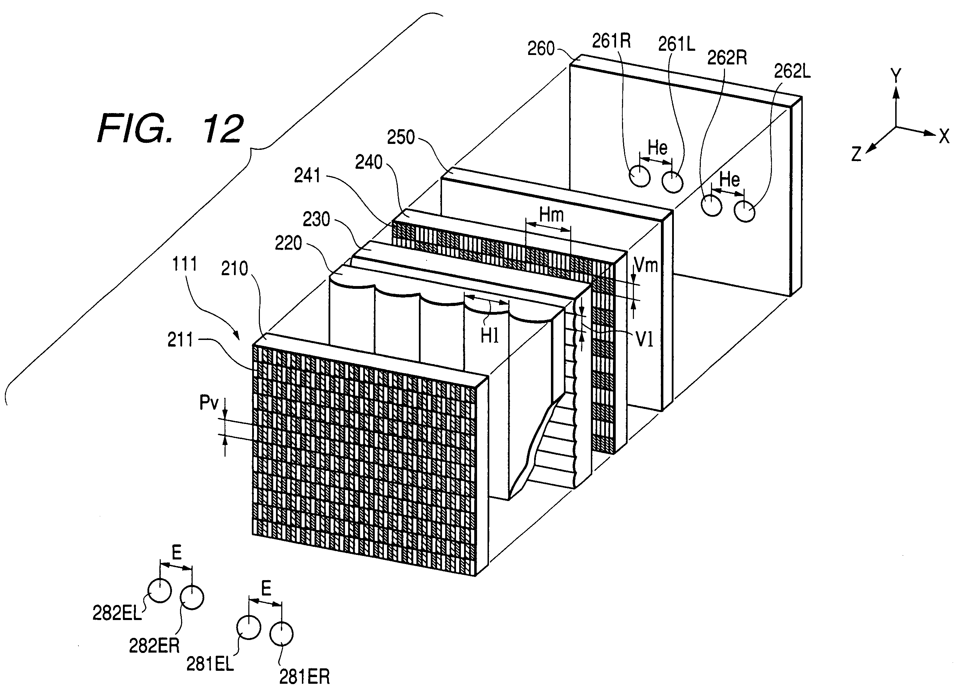

Fig. 12 is a schematic diagram to show the main part of the stereoscopic image display region 111. In Fig. 12, numeral 260 indicates the light source means, and 261R, 261L and 262R, 262L indicate on areas of the light source. The other areas of the light source are in the off state.

Numeral 250 denotes the optical means acting as a convex lens, such as the Fresnel lens or the like, which is designed according to such optical specifications as to image the surface of the light source means 260 approximately at the observer's position.

Numeral 240 designates the optical modulator, and the mask pattern 241 acting as an optical barrier is formed in the display screen thereof.

Numeral 230 represents a horizontal lenticular lens (horizontal cylindrical lens array) having the generating line in the horizontal direction (X-direction), which is composed of an array of many horizontal cylindrical lenses of the planoconvex shape arranged in the vertical direction (Y-direction).

The horizontal lenticular lens 230 is designed to have such lens curvature that the mask pattern 241 is imaged on the image display screen of the image display 210.

The lens pitch (width) V1 of the horizontal lenticular lens 230 is designed so as to correspond to the vertical width Vm of the transmitting portions and the Shield portions of the mask pattern 241.

Numeral 220 designates a vertical lenticular lens (vertical cylindrical lens array) having the generating line in the vertical direction, which is composed of an array of many vertical cylindrical lenses of the planoconvex shape arranged in the horizontal direction.

Each cylindrical lens forming the vertical lenticular lens 220 is designed to have such lens curvature that the mask pattern 241 is imaged at the observation position.

One pitch (width) H1 of the vertical cylindrical lenses of the vertical lenticular lens 220 corresponds to the horizontal pitch width Hm of the transmitting portions and the shield portions of the mask pattern 241.

The image display device 210 displays the synthetic parallax image 211 synthesized from two parallax images.

The image magnification of the horizontal lenticular lens 230 is set so that the vertical width Pv of displayed pixels of the synthetic parallax image 211 corresponds to the vertical width Vm of the transmitting portions and shield portions of the mask pattern 241.

Just as in the case of Embodiment 1, Fig. 12 is drawn with omitting the glass covers, polarizers, electrodes, etc. of the image display device 210, the optical modulator 240, and the light source means 260.

281EL, 281ER and 282EL, 282ER represent the left and right eyes of the image observers 281, 282, respectively.

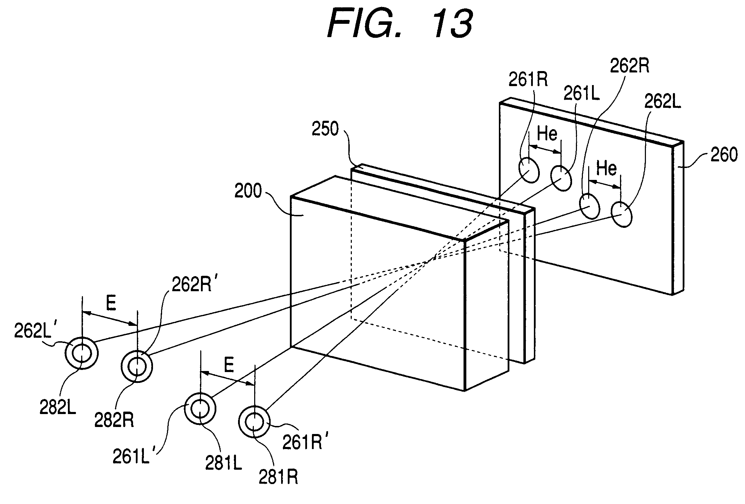

The on and off areas of the light source means 260 will be described below referring to Fig. 13. In Fig. 13, the on areas 261R, 261L and 262R, 262L on the light source means 260 are imaged at the observation position of the observers by the optical means 250 to form the areas 261R', 261L' and 262R', 262L'.

On that occasion, the on areas 261R, 261L and 262R, 262L are controlled so that the left and right eyes 281EL, 281ER and 282EL, 282ER of the observes 281, 282 correspond to the respective areas 261L', 261R' and 262L', 262R'.

The size of the on areas is designed to be such size that the size of the images thereof can cover each eye of the observers, and the positions of the on areas are determined based on the observer's pupil position information obtained by the view-point position detector 120 described previously.

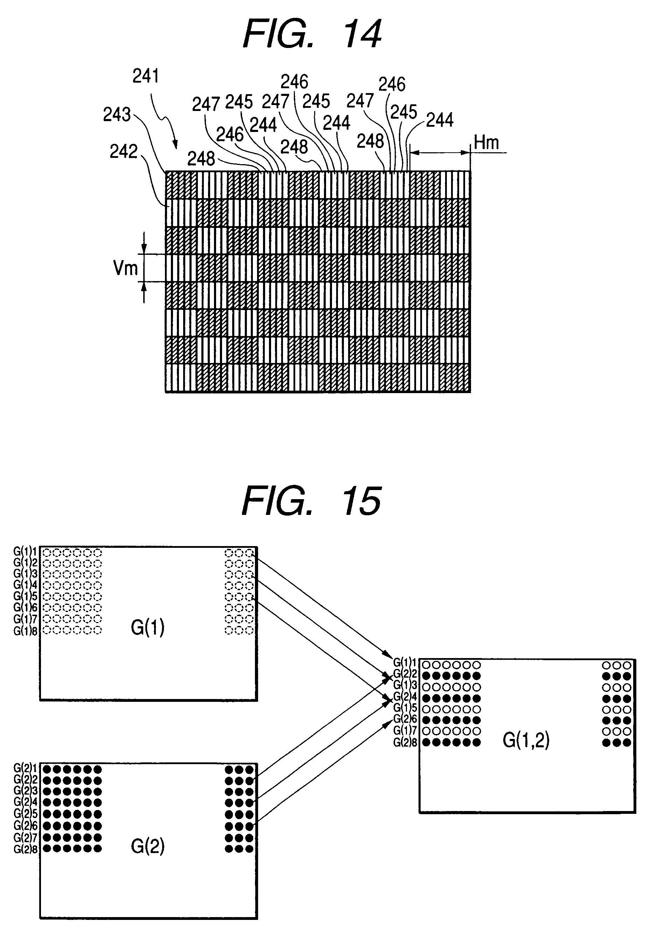

The mask pattern 241 displayed on the optical modulator 240 will be described next referring to Fig. 14. Fig. 14 is an enlarged front view of the mask pattern 241 illustrated in Fig. 11.

As illustrated in the same figure, the mask pattern 241 is a checkered pattern consisting of the transmitting portions 242 and the shield portions 243 having the horizontal pitch Hm and the vertical width Vm.

In the present embodiment each transmitting portion 242 is composed of five pixels 244 to 248 and each shield portion 243 is also composed of five pixels.

The parallax image displayed on the display device 210 will be described next referring to Fig. 15.

In Fig. 15, each of the two parallax images G(1), G(2) corresponding to the left and right eyes is divided into a lot of stripe images of the horizontal stripe shape as illustrated, and the stripe images G(1)i, G(2)i being elements of the parallax images G(1), G(2) are arranged on alternate scan lines to obtain the synthetic parallax image G(1, 2).

The pupil position detector 120 is one similar to that in Embodiment 1.

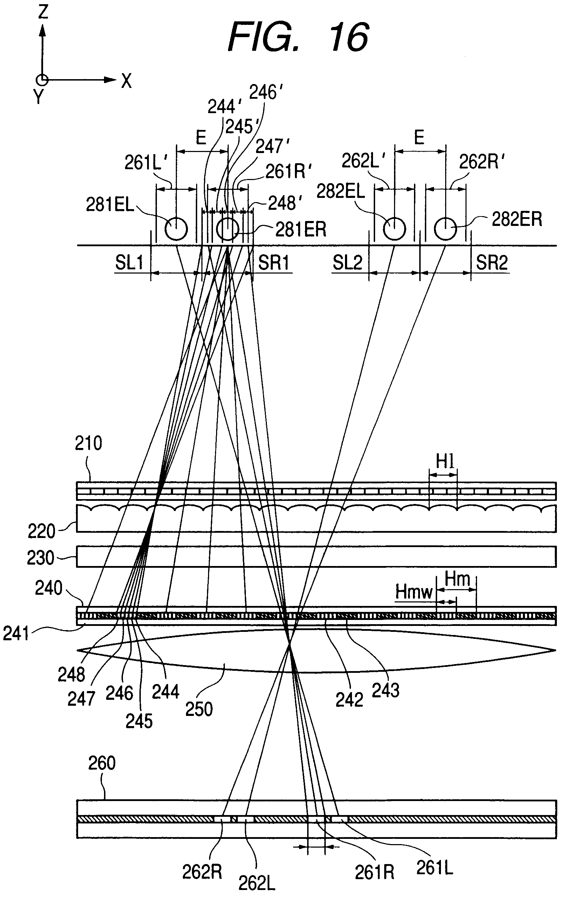

The optical action of stereoscopic image display will be described below referring to Fig. 16 to Fig. 19. Fig. 16 is a horizontal cross-sectional view (X-Z section) of the 3D window region 111.

In the same figure, light from an on area of the light source means 260, for example, from 261R travels through the optical means 250 to illuminate the optical modulator 240.

Light having passed through the pixels 244 to 248 of the transmitting portions 242 of the optical modulator is projected into the area SR1 at the observation position because of the action of the vertical lenticular lens 220. (The horizontal lenticular lens 230 has no specific action in this sectional direction.)

The beams projected into this illuminated area SR1 are modulated by the synthetic parallax image displayed on the display device 210 provided between the vertical lenticular lens 220 and the observer. In this cross section, since the beams travel, for example, through the element stripe images G(1)1, G(1)3, G(1)5,... of the parallax image G(1) forming the synthetic parallax image G(1, 2) illustrated in Fig. 15, the illuminated area SR1 is an area to which the parallax image G1 is projected.

However, since the on area 261R is imaged approximately in the area 261R' at the observation position because of the action of the optical means 250, the observable area of the parallax image G1 is limited to the vicinity of the area 261R' and it is not observed from the other positions, for example, from the eyes of 281EL, 282ER, and 282EL.

The area SR1 is composed of areas 244' to 248' corresponding to the pixels 244 to 248.

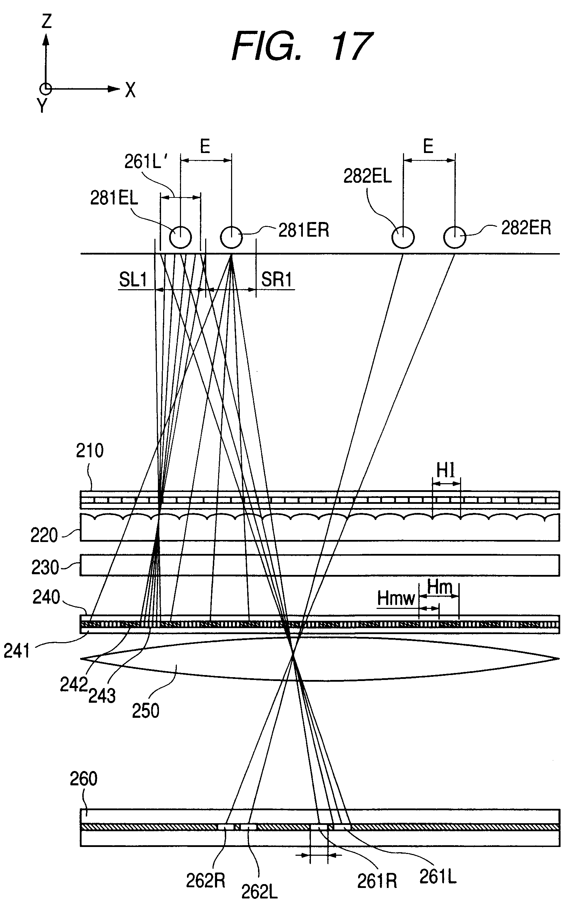

Likewise, as illustrated in Fig. 17, the light from the on area 261L travels through the optical means 250 to illuminate the optical modulator 240 in a cross section corresponding to a scan line one below or above the scan line of Fig. 16.

The light having passed through the transmitting portions 242 of the optical modulator is projected into the area SL2 at the observation position because of the action of the vertical lenticular lens 220. (The horizontal lenticular lens 230 has no specific action in this sectional direction.)

The beams projected into this illuminated area SL2 are modulated by the synthetic parallax image displayed on the display device 210 provided between the vertical lenticular lens 220 and the observer.

In this cross section, since the light travels, for example, through the element stripe images G(2)2, G(2)4, G(2)6,... of the parallax image G(2) forming the synthetic parallax image G(1, 2) illustrated in Fig. 15, the illuminated area GS2 is an area to which the parallax image G2 is projected.

However, since the on area 261L is imaged in the area 261L' at the observation position because of the action of the optical means 250, the observable area of the parallax image G2 is limited to the vicinity of the area 261L' and it is not observed from the other positions, for example, from the eyes of 281ER, 282ER, and 282EL.

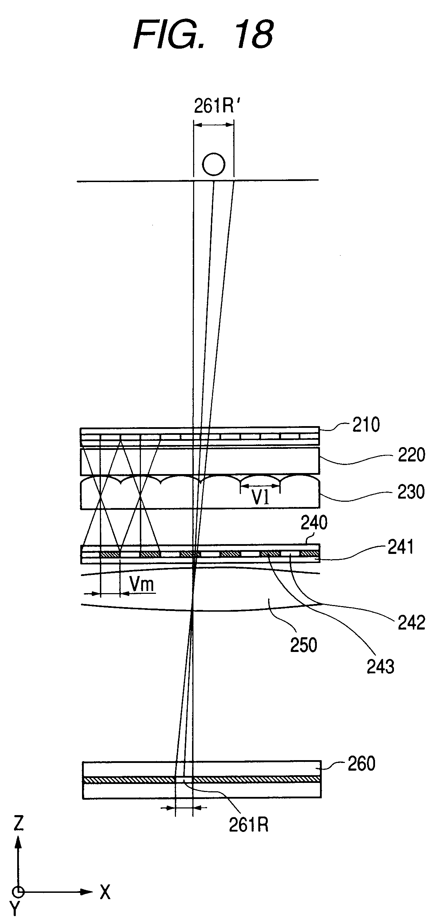

Fig. 18 is a vertical cross-sectional view (Y-Z section) of the window for stereoscopic image display. In this cross section, the light from an on area of the light source means 260, for example, from 261R travels through the optical means 250 to illuminate the optical modulator 240.

An image of the transmitting portions 242 of the mask pattern 241 in the optical modulator 240 is formed on the image display screen of the display device 210 because of the action of the horizontal lenticular lens 230 and on that occasion, the image is formed at such a magnification that the width of the transmitting portions 242 of the optical modulator 240 becomes the pixel width of the display device 210.

Therefore, only the element stripe images of the parallax image, for example, of G(1), are projected into the area by properly setting the positions of the optical modulator 240, the display device 210, and the horizontal lenticular lens 230.

Further, since the on area 261R is imaged in the area 261R' at the observation position because of the action of the optical means 250, the parallax image of G(1) can be observed only in the vicinity of the area 261R'.

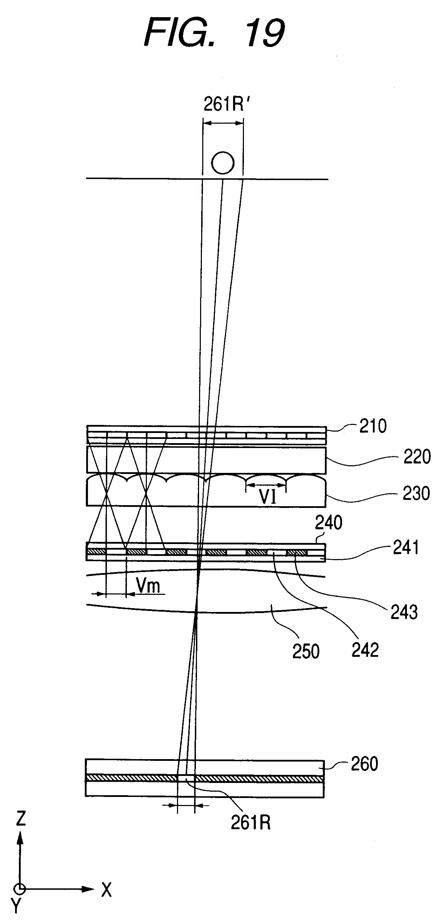

Likewise, as illustrated in Fig. 19, only the element stripe images of the parallax image G(2) are projected into a pixel column one pixel horizontally next to that of Fig. 15.

Although not illustrated, the same can also apply to the light emission area 261L. Therefore, when the eyes 281EL, 281ER are placed in the projected parallax image areas 261L', 261R', respectively, the observer can observe the stereoscopic image while observing the parallax images separately and independently by the left and right eyes.

The above description was given as to the observer 281, and the same also applies to the observer 282; the observer 282 can observe the stereoscopic image by properly setting the parallax image on the display device 210 and the mask pattern 241 on the optical modulator 240.

When the two states described above are displayed alternately in time-sharing manner and within the time of the after image effect of the eyes, the two observers can observe the stereoscopic image simultaneously in the single image display.

If the observers 281, 282 move, the positions of the projection areas of the optical modulator 240 and the positions of the on areas of the light source means 260 will be moved in pixel units, based on the information of the pupil position detector, so that the projected parallax image areas follow the observer's pupil positions, thereby enabling stable observation of stereoscopic image.

The above description was made about the case of the two observers, but the present embodiment can also be applied similarly to the cases of three or more observers; each observer can observe the stereoscopic image in time-sharing manner by controlling the emission areas of the light source means 260 to the positions according to the respective observers and properly controlling the mask pattern 241 of the optical modulator 240. In addition, the independent emission areas were set for the respective left and right eyes of each observer in the present embodiment, but each emission area can be set as an area including the areas corresponding to the left and right eyes. The utilization efficiency of the light source may also be increased by using the optical member having the power only in the horizontal direction (X-direction), as the optical means 260 to form the emission areas in the vertical stripe shape. Further, the present embodiment employed the surface light emitting device having the size approximately equal to that of the image display device, as the light emitting means and used portions thereof for emission of light, but the light emitting means can be a light emitting device having a light emitting portion of a fixed area and mechanically moved according to the position of the observer. These can also be applied similarly to Embodiment 2, as in Embodiment 1.

The present invention can accomplish the stereoscopic image display apparatus that permits the observation of stereoscopic image with good image quality.

In addition, the present invention can accomplish the stereoscopic image display apparatus that permits a plurality of observers to observe the stereoscopic image simultaneously with good image quality.

A stereoscopic image display apparatus is constructed to guide a parallax image displayed on a display, to the left eye and to the right eye of an observer, thereby permitting the observer to stereoscopically observe the image information displayed on the display. The stereoscopic image display apparatus has a view-point position detecting device for detecting positions of view points of the observer, an image display device for displaying the parallax image, a light source device in which a position of each light emitting portion is controlled based on information from the view-point position detecting device, an optical system for imaging each light emitting portion of the light source device at or near an observation position, and a separating device for separating light from the light source device to guide separated beams to the two eyes of the observer.

## Claims

1. A stereoscopic image display apparatus comprising light source means in which positions of a plurality of light emitting portions are controllable; image display means which displays a stripe image obtained by dividing parallax images into a lot of stripe pixels and. arranging the stripe pixels in a predetermined order to form one image; separating means which converts beams from the light source means into beams with directivity and which separates beams from the image display means into beams toward a plurality of areas and guides the separated beams to an observer so as to permit the observer to visually recognize the stripe image as a stereoscopic image; optical means for forming an image of each light emitting portion of the light source means at or near an observation position through the separating means and the image display means; and view-point position detecting means for detecting positions of view points of the observer, wherein said light source means controls the number and positions of light emitting portions, based on a signal from the view-point position detecting means.

2. The stereoscopic image display apparatus of Claim 1 wherein said separating means is comprised of an optical modulator having a discrete pixel structure, or comprised of an optical modulator having a discrete pixel structure and an optical system.

3. The stereoscopic image display apparatus of Claim 2 wherein said optical system comprises a vertical cylindrical lens array consisting of vertical cylindrical lenses having a generating line in the vertical direction and a horizontal cylindrical lens array consisting of horizontal cylindrical lenses having a generating line in the horizontal direction.

4. The stereoscopic image display apparatus of Claim 1 wherein said view-point position detecting means comprises infrared light emitting means and detects positions of pupils of the eyes of the observer.

5. The stereoscopic image display apparatus of Claim 1 wherein said image display means is comprised of a transmissive image display device having a discrete pixel structure.

6. The stereoscopic image display apparatus of Claim 1 wherein said light source means is a surface emission type light source having a discrete pixel structure.

7. The stereoscopic image display apparatus of Claim 1 wherein said optical means is a Fresnel lens acting as a convex lens, or a Fresnel lens acting as a convex lens only in the horizontal direction.

8. The stereoscopic image display apparatus of Claim 1 wherein said view-point position detecting means detects positions of view points of a plurality of observers independently of each other and wherein said light source means controls positions of light emitting portions corresponding to the respective observers, based on the signal from the view-point position detecting means.

9. A stereoscopic image display apparatus in which beams from light source means in which a position of a light emitting portion is controllable, are converted into beams with directivity by separating means to illuminate a parallax image on image display means displaying stripes of parallax images whereupon beams based on the respective parallax images are guided separately to the right eye and to the left eye of an observer, thereby permitting the observer to observe a stereoscopic image, wherein an image of the light emitting portion of the light source means is formed at or near an observation position through the separating means and the image display means by optica means and wherein the position of the light emitting portion of the light source means is controlled, based on a signal from view-point position detecting means for detecting positions of view points of the observer.

10. The stereoscopic image display apparatus of Claim 9 wherein said separating means is comprised of an optical modulator having a discrete pixel structure or comprised of an optical modulator having a discrete pixel structure and an optical system.

11. The stereoscopic image display apparatus of Claim 10 wherein said optical system comprises a vertical cylindrical lens array consisting of vertical cylindrical lenses having a generating line in the vertical direction and a horizontal cylindrical lens array consisting of horizontal cylindrical lenses having a generating line in the horizontal direction.

12. The stereoscopic image display apparatus of Claim 9 wherein said view-point position detecting means comprises infrared light emitting means and detects positions of pupils of the eyes of the observer.

13. The stereoscopic image display apparatus of Claim 9 wherein said image display means is comprised of a transmissive image display device having a discrete pixel structure.

14. The stereoscopic image display apparatus of Claim 9 wherein said light source means is a surface emission type light source having a discrete pixel structure.

15. The stereoscopic image display apparatus of Claim 9 wherein said optical means is a Fresnel lens acting as a convex lens, or a Fresnel lens acting as a convex lens only in the horizontal direction.

16. A stereoscopic image display apparatus comprising light source means in which positions of light emitting portions in a number according to the number of observers are controllable; image display means which displays a stripe image obtained by dividing a parallax image for the right eye and a parallax image for the left eye each into a lot of stripe pixels and alternately arranging the right stripe pixels and left stripe pixels thus obtained, in a predetermined order to form one image; separating means which converts beams from the light source means into beams with directivity by a lenticular lens array and which separates beams from the image display means into beams toward a plurality of areas and guides the beams to each observer to permit the observer to visually recognize the stripe image as a stereoscopic image; imaging means for imaging each light emitting portion of the light source means at or near an observation position through the separating means and the image display means; and view-point position detecting means for detecting positions of view points of each observer, wherein said light source means controls the number and positions of light emitting portions, based on a signal from the view-point position detecting means.
